# EUROPEAN PATENT SPECIFICATION

(11) **EP 2 135 233 B1**
(45) Date of publication and mention of the grant of the patent: **10.10.2012**
(21) Application number: 07802595.4
(22) Date of filing: 14.08.2007
(51) Int. Cl.: G09G 3/20

(54) **PROLONGED DISPLAY LIFETIME**
VERGRÖSSERTE DISPLAY-LEBENSDAUER
DURÉE DE VIE D'UN DISPOSITIF D'AFFICHAGE PROLONGÉE

(30) Priority: 23.02.2007 US 891355 P; 02.03.2007 US 681626
(43) Date of publication of application: 23.12.2009
(73) Proprietor: Sony Ericsson Mobile Communications AB, 221 88 Lund (SE)
(72) Inventor: LESSING, Simon, SE-211 56 Malmö (SE); LINCOLN, Staffan, SE-226 51 Lund (SE)
(74) Representative: Valea AB
(86) International application number: PCT/EP2007/058393
(87) International publication number: WO 2008/101552

(56) References cited:
- EP-A- 1 489 589
- EP-A- 1 814 098
- WO-A-2005/116974
- US-A- 6 014 151
- US-A1- 2003 071 769
- US-A1- 2004 051 705
- REEVES WILLIAM T: "PARTICLE SYSTEMS - TECHNIQUE FOR MODELING A CLASS OF FUZZY OBJECTS" ACM TRANSACTIONS ON GRAPHICS, ASSOCIATION FOR COMPUTING MACHINERY, NEW YORK, NY, US, vol. 2, no. 2, April 1983 (1983-04), pages 91-108, XP002427042 ISSN: 0730-0301 cited in the application

## Description

### TECHNICAL FIELD OF THE INVENTION

The present invention relates to the field of display arrangements and particularly, but not exclusively, to a method for extending the lifetime of a display arrangement in a portable device and a portable device comprising such a method.

### DESCRIPTION OF RELATED ART

Within the field of portable devices there is a trend to provide these devices with an ever increasing number of functions. In particular, there is a trend to provide portable devices with exterior displays for presenting status information etc. The status information may e.g. comprise information about the status of the portable device itself or information about other conditions known to the portable device. For example, an exterior display may present an icon indicating the battery status for the portable device. In another situation the display may comprise a clock or similar for presenting the current time. Naturally, a vast spectrum of other status information can easily be presented on an exterior display.

Status information or similar is typically presented in a substantially unchangeably manner with respect to the character and position on the display etc. This increases the risk for degradation of the display that may eventually lead to "burnouts" producing darkened, shadow or "ghost" images on the display.

The problem may not be imminent for LCDs (Liquid Crystal Displays) that are commonly used in portable devices, since LCDs have become less susceptible to burnout effects. However, the problem is indeed relevant for other display types, e.g. for the so-called OLED displays (Organic Light Emitting Diode displays).

The OLED displays are getting momentum as exterior displays in portable devices since they exhibits low power consumption and superior resolution and crispiness, and not the least since they have the ability to blend in extremely well with the shape and color of various exterior designs. However, OLED displays have a rather short lifetime compared to traditional LCD displays and the performance of an OLED display will therefore degrade comparably fast. The degradation is on individual diode level, and heavily used areas - e.g. areas presenting a clock or a battery icon or some other status information - tend to degrade in performance (less luminance), which results in annoying silhouettes.

Degradation effects may be avoided by periodically moving the status information presented on the displayed. However, this is unsuitable in applications where the status information should have a fixed position, e.g. for the reasons of being easily detected by the user. In addition, moving the status information will typically be insufficient to avoid long term degradation effects since the presented status information is typically insufficiently distributed to accomplish an even utilization of the display. In addition, there may be insufficient space in a small display on a portable device to accomplish the necessary movements of the presented status information.

Degradation effects may also be avoided by temporarily switching the image presenting status information to a replacement image being less degrading with respect to the display. The status image can then be switched back when the user wishes to see the status information and/or when the status information is updated. However, it is difficult to find a replacement image that has sufficiently low degrading effects, especially on a small display in a portable device. Moreover, switching back from a replacement image to the status image will typically hide the *change* or *transition* of an icon or similar that presents the status information. In other words, the icon or similar may have assumed its new shape before the switch from the replacement image to the status image has been completed. Hence, a user of the portable device will not be able to readily see the transition of the icon or similar from one state to another. Rather, the user will merely see the new state. Hence, the user will receive no support in detecting a change in status information. Instead, the user has to examine the status image and rely on memory to find out a possible change.

US2004/0051705 A1 discloses a display system and a method of eliminating a residual image in the display system. In the method a mixed video image that includes a video image from a video source and at least one OSD block is generated. Thereafter, the mixed video image is displayed on a display screen to thereby eliminate a residual image on the display screen and the at least one OSD block is scanned to different positions on an active image portion of the display screen.

In view of the above it would be advantageous to provide an improved method for reducing or eliminating degradation effects in a display of a portable device and a portable device comprising such a method. In particular, it would be advantageous to provide an improved method and device for mitigation of possible burnout effects that supports the user in detecting a change in the information presented on the display.

### SUMMARY OF THE INVENTION

The present invention is intended to solve the problem of providing an improved method for reducing or eliminating degradation effects in a display of a device, and a device comprising such a method.

The problem is solved by a method and a portable device according to the independent claims. Embodiments are described in the dependent claims.

Further advantages of the present invention and embodiments thereof will appear from the following detailed description of the invention.

It should be emphasized that the term "comprises/comprising" when used in this specification is taken to specify the presence of stated features, integers, steps or components, but does not preclude the presence or addition of one or more other features, integers, steps, components or groups thereof.

It should also be emphasised that the methods defined by the appended claims may comprise further steps in addition to those mentioned and the steps may be performed in different sequences without departing from the present invention.

### BRIEF DESCRIPTION OF THE DRAWINGS

The present invention will now be described in more detail in relation to the enclosed drawings, in which:

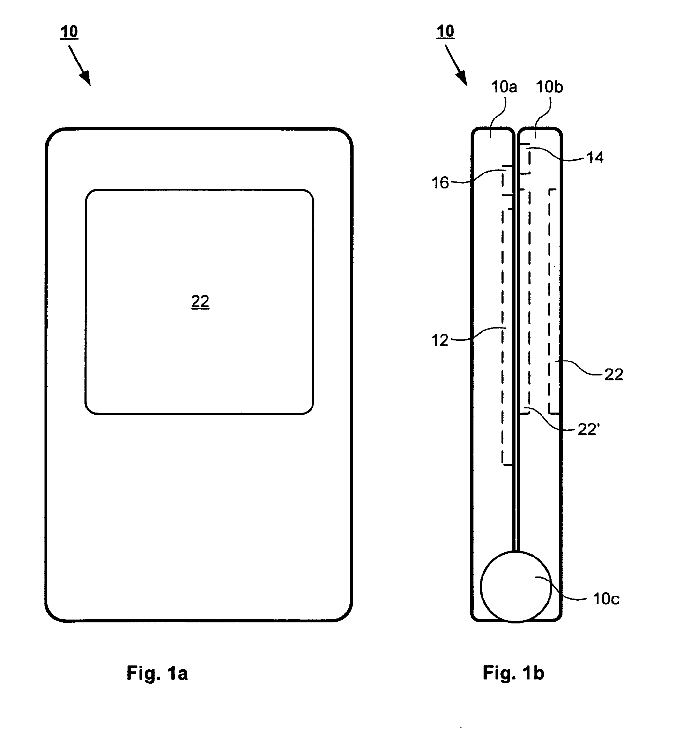

- Fig. 1a: is a schematic front view of a portable communication device in the form of a cell phone 10 provided with an exterior display 22.
- Fig. 1 b: is a schematic side view of the cell phone 10 in Fig. 1 a.
- Fig. 2: shows the cell phone 10 in Fig. 1a-1b connected to a cellular network 30.
- Fig. 3: is a schematic illustration of the relevant parts of the cell phone 10 in Fig. 1-2.
- Fig. 4a: is a schematic illustration of a particle generation in a particle system 400 presented on the display 22.
- Fig. 4b: is a schematic illustration of a later phase in the life of the particle system 400 in Fig. 4a.
- Fig. 5: is a schematic illustration of the display 22 and the particles 410 in the particle system 400 when status information is to be presented on the display 22.
- Fig. 6: is an illustration of status information in the form of an envelope 600 produced by the particles 410 of the particle system 400.

### DETAILED DESCRIPTION OF EMBODIMENTS

Preferred embodiments of the present invention relate to portable devices in general and to portable *communication* devices in particular comprising at least one display for presenting visible information to a user of the device.

Figure 1a is a front view and Fig. 1b is a side view of a portable communication device according to an embodiment of the invention. The communication device schematically illustrated in Fig. 1a-1b is a mobile cell phone 10 adapted to operate according to 3G-technology (*e.g*. W-CDMA or CDMA2000) or 2,5-technology (*e.g*. GPRS) or 2G-technology (*e.g*. GSM) or a similar technology. Information about 3G-technology, 2,5G-technology and 2G-technology can *e.g*. be found in specifications from the 3^{rd} Generation Partnership Project (3GPP), see *e.g*. the web-site at www.3gpp.org.

The cell phone 10 in Fig. 1a-1b comprises a first half 10a and a second half 10b arranged opposite to each other. The two halves 10a, 10b are connected via a joint 10c, which makes it possible to fold the halves 10a, 10b for closing the phone 10 and to unfold the halves 10a, 10b for opening the phone 10. Cell phones comprising two halves that can be folded and unfolded are well known in the art and they need no further description. Typical examples are the cell phone models Z310i, W710i, Z710i and Z300 from SonyEricsson each comprising two halves that can be folded and unfolded.

The inner side of the first half 10a in Fig. 1b is provided with a keypad 12 and a microphone 16. These features are illustrated by dashed lines in Fig. 1 b. The keypad 12 is used for entering information such as selection of functions and responding to prompts. The microphone 16 is used for sensing the voice from the user.

The inner side of the second half 10b shown in Fig. 1b is provided with a loudspeaker 14 and an interior display 22'. These features are illustrated by dashed lines in Fig. 1 b. The loudspeaker 14 is used for presenting sounds to the user and the interior display 22' is used for displaying images, video sequences, functions and prompts etc to a user of the cell phone 10.

As can be seen in Fig. 1a-1b, the cell phone 10 is also provided with an exterior display 22. It is preferred that the exterior display 22 is an OLED-display or similar for presenting status information, which is typically presented in a substantially unchangeably manner with respect to the character and position on the exterior display 22.

In addition, the cell phone 10 includes an antenna, which is used for communication with other users via a network as will be explained below. The antenna is in-built in the cell phone 10 and hence not shown in Fig 1.

It should be added that the cell phone 10 in Fig. 1a-1b is merely an example of a portable communication device in which the invention can be implemented. In addition, the invention can for instance be used in connection with a music player, a radio, a PDA (personal digital assistant), a palm top computer, a lap top computer or a smartphone or any other suitable portable device comprising a display.

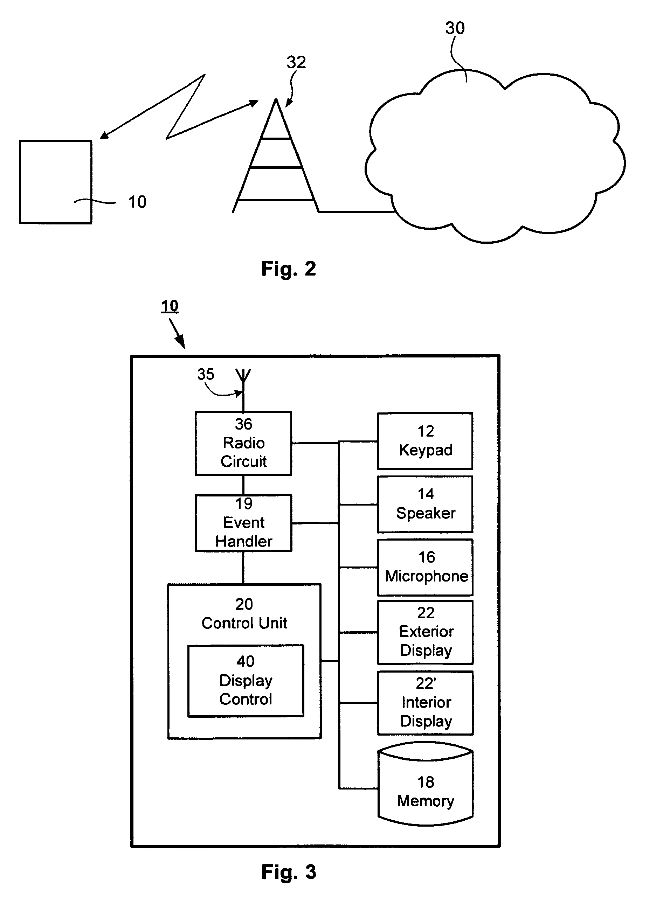

Fig. 2 shows the cell phone 10 connected to a cellular network 30 via a base station 32. The network 30 is preferably a 3G network such as *e.g.* a WCDMA network or similar. However, it may also be a GPRS network or any other 2G, 2,5G or 2,75G network. Moreover, the network 30 does not have to be a cellular network but can be some other type of network, such as Internet, a corporate intranet, a LAN or a wireless LAN or similar.

Fig. 3 shows parts of the interior of the cell phone 10 being relevant for the present invention. The cell phone 10 is provided with an antenna 35 connected to a radio circuit 36 for enabling radio communication with the network 30 as described above with reference to Fig. 2. The radio circuit 36 is in turn connected to an event handling unit 19 for handling such events as outgoing and incoming communication to and from external units via the network 30, *e.g*. calls and messages, *e.g*. SMS (Short Message Service) and MMS (Multimedia Messaging Service) etc. This is all common parts and functions of substantially all modern cell phones, as is well known to those skilled in the art.

Furthermore, a control unit 20 is preferably arranged within the cell phone 10 for controlling and supervising the general operation of the phone 10. The control unit 20 may be implemented by means of hardware and/or software and it may comprise one or several hardware units and/or software modules, *e.g*. one or several processor units provided with or having access to the appropriate software and hardware required by the functions of the cell phone 10, as is well known by those skilled in the art.

As can be seen in Fig. 3, it is preferred that the control unit 20 is connected to the keypad 12, the speaker 14, the microphone 16, the event handling unit 19, the exterior display 22 and the interior display 22'. This enables the control unit 20 to control and communicate with these units or similar for *e.g*. exchanging information and instructions with the units.

Before we proceed it should be emphasised that beside the parts and units shown in Fig. 3 there may be additional parts and units or similar present in the cell phone 10. The parts and units shown in Fig. 3 may also be connected to more parts and units than illustrated.

Of particular interest in connection with the present invention is the display-control 40 comprised by the control unit 20. Being a part of the control unit 20 implies that the display-control 40 may be implemented by means of hardware and/or software and it may comprise one or several hardware units and/or software modules, *e.g*. one or several processor units provided with or having access to the software and hardware appropriate for the functions required.

The display-control 40 is arranged to operatively process the information presented on the two displays 22, 22'. In particular the display-control 40 is arranged to operatively process the status information presented on the exterior display 22. Cell phones provided with various display controls for controlling the information presented on an interior and/or an exterior display is known *per se*. Such display controls or similar can e.g. be found in the above mentioned cell phone models Z310i, W710i, Z710i and Z300 from SonyEricsson.

However, as a contrast to traditional display controls used in portable devices the display-control 40 utilizes a particle system to form information on the external display 22 and possible also on the internal display 22'.

A wide range of particle systems are known to those skilled in the art. For example, particle systems used for modeling objects in movies and similar was described by Reeves as early as in 1983, see: "Particle Systems - A Technique for Modeling a Class of Fuzzy Objects", ACM Computer Graphics, Vol. 2 No 2, April 1983, pages 91-108. Another example can be found in the patent US 5,777,619 (*Brinsmead*) describing a method for simulating and rendering hair by means of a particle system. Still another example can be found in the article "Real-Time Cloud Rendering", EUROGRAPHICS European Association for Computer Graphics, Vol. 20 (2001) No 3. Many other sources describing different aspects of particle systems are readily available to those skilled in the art.

A particle system is essentially a set of rules that are used to define how to "generate" and "render" particles for display images on a display such as a computer display screen.

Generating particles in a particle system includes defining particle attributes for each particle to be modeled.

For example, particle attributes may include the following attributes:
(1) position,
(2) velocity (both speed and direction),
(3) size,
(4) color (both color and gray scale),
(5) transparency,
(6) shape,
(7) lifetime.

The particles in a particle system generated by the display-control 40 may be assigned more, fewer and/or other attributes than those in the above exemplifying list. In addition, the attributes may be varied and/or altered during particle generation. In addition or as an alternative, at least some attributes of an individual particle may be varied and/or altered during the lifetime of the particle, e.g. velocity (speed and direction), size, color (color and gray scale), transparency, shape and/or lifetime. One may say that a particle is no more than a record containing some attributes.

It is preferred that the display-control 40 generates particles into a particle system by means of controlled stochastic processes. One process may e.g. determine the number of particles entering the system during each interval of time, that is, at a given frame or at a given rendering. It is preferred that the number of new particles depends on the screen size of the external display 22.

Following particle generation, the display-control 40 is arranged to render the particles by converting the attributes for each particle into information that can be used by the display 22 to output the rendered particle information by controlling individual pixels on the display 22. In other words, an image is created wherein the position and other properties of each particle are defined. This image is then presented on the exterior display 22.

It is preferred that a rendering is performed periodically. It is even more preferred that a rendering is performed periodically during the life time of the particle system, even if the particle generation has stopped. In this way a series of images will be produced and presented on the exterior display 22, in which series the position and possibly other properties of the particles in the particle system will be different for each presented image. The observant reader realizes that this will create an impression of motion with respect to the particles, at least if the images are created and presented at sufficiently short intervals. The principle is somewhat similar to a movie that is shot by means of 35 millimeter film, which is subsequently presented in a well known manner on a movie screen running at 24 frames (images) per second or more.

Individual particles may be rendered and displayed as dots, lines, polygons or more complex objects. In embodiments of the present invention it is preferred that the particles assume a substantially square like shape or similar, e.g. such as rectangles or triangles, or any other substantially polygonal shape being adapted to form a part of a raster pattern such as a raster image, e.g. in the form of a bitmap grid or similar. This makes the particles suitable for forming a part of an image presented in a bitmap format or some other raster graphic format, as will be described later. However, this does not preclude particles with other shapes such as e.g. substantially circular, elliptical or other curve like shapes. It should be emphasized that a single particle system may comprise particles of different shapes and sizes.

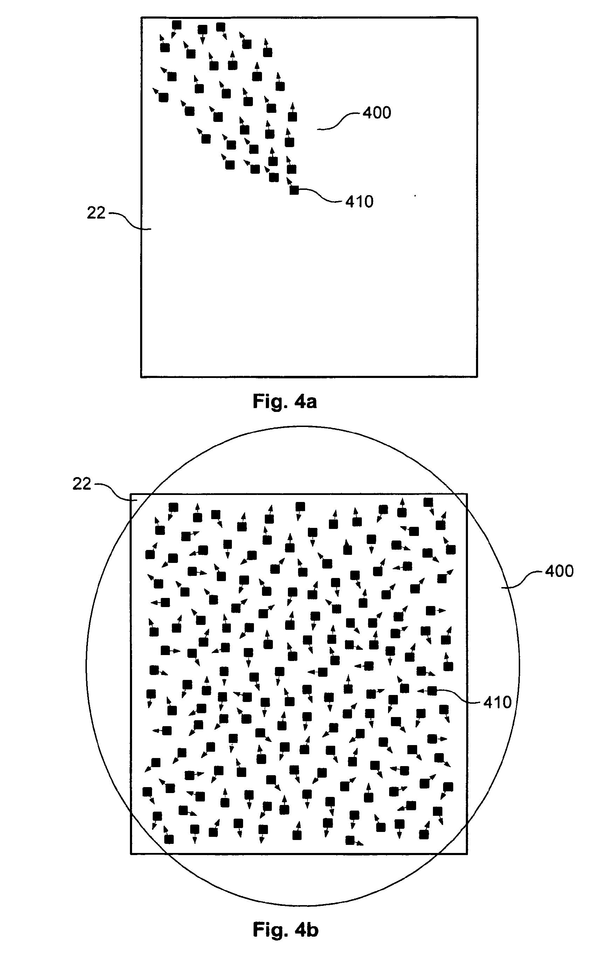

Figure 4a shows a schematic illustration of an exemplifying particle generating that is presented on the exterior display 22 of the cell phone 10. The exemplifying particles 410 have a substantially square like shape and each particle has been provided with an imaginary arrow. The *direction* of the imaginary arrow is intended to indicate the current travelling direction for the particle. The *length* of the imaginary arrow is intended to indicate the travelling speed for the particle. The arrows of the exemplifying particles 410 in Fig. 400 are of substantially the same length indicating that all particles 410 travel at substantially the same speed. However, in other embodiments of the present invention the travelling speed may be individually determined for each particle or for each subset of particles. Naturally, the particles 410 may be of any suitable intensity or colour - including but not limited to black, white and grey scales - depending on the ability of the display 22 and the display-control 40. It should be added that a particle 410 may correspond to a single pixel in the display (e.g. black or white particles) or a group of pixels in the display (e.g. an RGB group for a coloured particle).

It is preferred that the travelling speed for the particles 410 is reduced as the battery power of the cell phone 10 decreases. This reduces the required processing power which in turn reduces the consumption of battery power. In addition, it provides the user with an excellent indication that the battery should be charged.

As indicated in Fig. 4a the particles 410 may be emitted from a point or an area near the *centre* of the display 22. As also indicated in Fig. 4a, the particles 410 may be emitted in a direction towards the upper left corner of the display 22. However, this is only an example and the particles 410 may be emitted from substantially any position. Similarly, the particles 410 may be emitted from substantially any object - at least any object that can be presented on the display 22. In addition, the particles 410 can be emitted from several positions, e.g. such as the perimeters of an object that is visibly or invisibly allocated on the display 22. The object in question may e.g. be an icon, or a letter or a digit or some other object that is typically presented on the display 22, or even a cluster of such objects. Moreover, the particles 410 may be emitted in several directions. The particles 410 may even be emitted in substantially every direction, e.g. randomly emitted in any direction of 0-360° from an object allocated on the display 22. In addition, as illustrated in Fig. 4a by the three particles in the upper left corner of the display 22 having arrows pointing in a downward direction, it is preferred that the particles 410 bounce at the outer perimeter of the display 22.

Figure 4b shows another schematic illustration of the particle system 400 generated on the exterior display 22. The particle generation may still be active or it may have ended. In either case, the display 22 in Fig. 4b is substantially covered with particles 410 that move in substantially any direction so as to give a substantially uniform utilization of the display 22. This may e.g. be accomplished by more or less randomly *generating* and *emitting* particles 410 with different attributes in substantially any direction as described above. In addition or as an alternative this may be accomplished by *varying the attributes* of the already generated particles, e.g. by varying the velocity (speed and direction) of the individual particles in a substantially random manner.

Naturally, there are many more or less sophisticated ways of moving the particles 410 on the display 22 so that the display 22 is substantially uniformly utilized. In addition to the examples given above it should be mentioned that the particles 410 may e.g. be moved so as to emulate a cloud like shape or some other shape that gives a substantially uniform utilization of the display 22.

To summarize, in view of the above it should be clear that it is possible to provide an excellent reduction or even an avoidance of any burnout effects by allocating a particle system 400 on the exterior display 22 and move the particles 410 in the particle system 400 so that the display 22 is substantially uniformly utilized. This may even be done on pixel level, since a particle may correspond to a pixel on the display 22.

However, moving the particles 410 so that the display 22 is substantially uniformly utilized is less suitable during the short periods when the display 22 is actually presenting status information to a user of the cell phone 10. Thus, when the display 22 is presenting status information to a user it is preferred that the movement of the particles 410 in the particle system 400 is at least temporarily changed so as to form a representation of the status information to be presented.

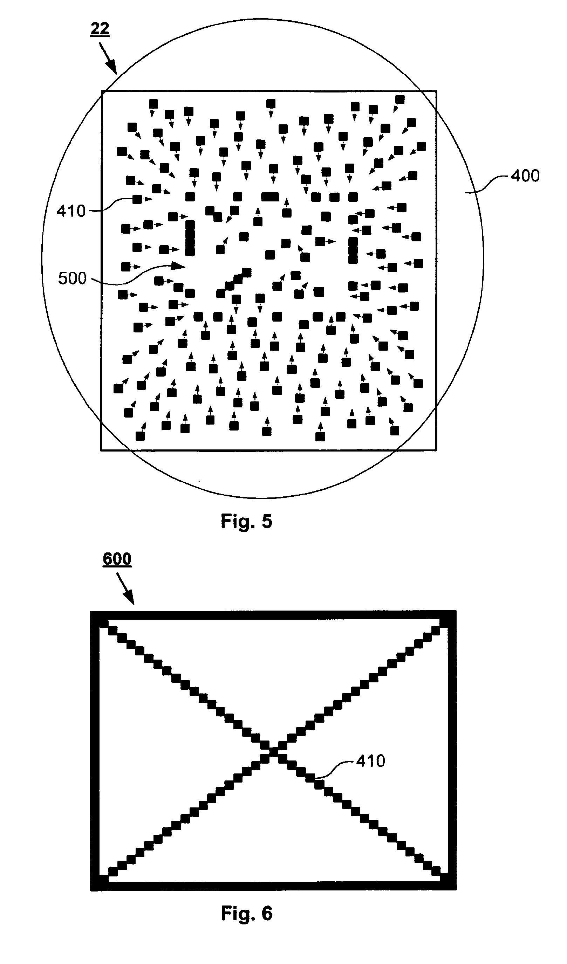

Figure 5 shows a schematic and exemplifying illustration of the exterior display 22, the particle system 400 and the particles 410 in a situation where status information is on its way to be presented on the display 22.

As an example it is assumed that a message has been received by the cell phone 10. Hence, the status information presented on the display 22 should be represented by an object or similar designed so that a user understands that a message has been received. To this end a bitmap 500 or similar forming an object in the form of a schematic envelope has been allocated on the display 22. The exemplifying bitmap 500 in Fig. 5a is presented on the display 22 in by means of a grey shade. The bitmap 500 in Fig. 5a may be more or less visibly or even invisibly arranged on the display 22.

Before we proceed a brief explanation should be given of the expression "bitmap". A bitmap or similar raster graphics is essentially a data file or structure typically representing a generally squared, rectangular or other polygonal grid of pixels or points or similar on a computer monitor or on some other display device. The color etc of each pixel is individually defined; images in the RGB color space, for instance, often consist of colored pixels defined by three bytes - one byte each for red, green and blue. Less colorful images require less information per pixel; for example, an image with only black and white pixels requires only a single bit for each pixel. Raster graphics are distinguished from vector graphics in that vector graphics represent an image through the use of geometric objects such as curves and polygons.

Once the bitmap 500 in Fig. 5a has been allocated on the display 22 the bitmap 500 is utilized by the display-control 40 as an attractor to which the particles 410 in the particle system 400 are drawn, so as to form a representation of the status information to be presented. This has been illustrated in Fig. 5a by directing the imaginary arrows on the particles 410 towards the schematic envelope formed by the bitmap 500. This indicates that the attributes of the particles 410 have been updated and changed so that the particles 410 move towards the bitmap 500. It is preferred that each particle is drawn to the point in the bitmap 500 that is the nearest to the particle in question. However, one or several other points in the bitmap are clearly conceivable, e.g. a corner point or a centre point. The point to which a specific particle 410 is drawn may even be selected in a random manner from the points in a bit map 500 or similar raster image.

Using a bitmap 500 or a similar raster image as an attractor for the particles 410 makes it easy to compute the direction and distance etc from a particle to a point in the bitmap 500 or similar. In particular, it is much easier to compute the direction and distance from a particle to a point in a bitmap than computing the direction and distance from a particle to a vector shape, which is traditionally used as attractors in particle systems.

The attraction forces from the attractor bitmap 500 working on the particles 410 shown in Fig. 5a are substantially the same for all particles 410. However, other solutions are clearly conceivable. An alternative solution is to let the attraction forces decline with the distance from the attractor bitmap 500, e.g. inversely proportional to the distance (1/distance). In that case the particles 410 most far away from the attractor 500 would approach the attractor at a lower speed compared to the particles 410 near to the attractor 500. Another alternative may be to increase the attraction forces with the distance from the attractor 500. IN that case the particles 410 most far away from the attractor 500 would approach the attractor at a higher speed compared to the particles 410 near to the attractor 500.

When a particle is drawn to and finally arrives at a point in the bitmap 500 the movement of the particle is preferably stopped so that the particle is positioned stationary on said point in the bitmap 500. If several particles 410 end up positioned at the same point it may be sufficient to let one or a few particles be left active. The positioning of stationary particles 410 in the bitmap 500 grid has been illustrated in Fig. 5 by particles 410 arranged on the bitmap 500 without being provided with the imaginary arrow.

A complete presentation of status information by an object 600 comprising attracted and positioned particles 410 so as to form a schematic envelope is illustrated in Fig. 6. When an object 600 (e.g. an envelope icon) representing the status information has been formed on the display 22 by means of the particles 410 there is no need for any attractor in the form of a bitmap 500 or similar. Hence, the bitmap 500 can be deactivated and removed. However, as an alternative the particles 410 may be deactivated and the bitmap 500 may be faded in to a visible shape. This is particularly so when bitmap 500 has the same or substantially the same shape as the object 600 (e.g. an envelope icon) representing the status information to be presented on the display 22.

To summarize, in view of the above it should be clear that a particle system 400 comprising the particles 410 can be controlled by an attractor in the form of a bitmap 500 or a similar raster graphic format. In particular, the bitmap 500 or similar provides a visible, semi-visible or invisible image representation of the status information to be presented by the exterior display 22 and to which the particles 410 are drawn. This creates a stream of particles 410 that can be easily detected and followed by the user. In other words, the stream of particles 410 provides the user with a support in detecting a change in status information. Hence, the transaction from the state when the particles 410 are moving so that the display 22 is substantially uniformly utilized to a state when the particles 410 form an object 600 for presenting status information on the display 22 is clearly visible to the user.

Below the steps are described of an exemplifying method for at least eliminating degradation effects in the display 22 by using a particle system 400 such that the transaction from the state when the particles 410 are moving in an less degrading manner to a state when the particles 410 form an object 600 for presenting status information on the display 22 is clearly visible to the user.

A first step S1 in an exemplifying embodiment of the present invention comprises an initialisation of a method for reducing or eliminating degradation effects in the display 22. The initialization may include such actions as e.g. defining particle attributes for the particles 410 in a particle system 400 to be allocated in the exterior display 22 of the cell phone 10 and an initialization of controlled stochastic processes for generating particles into the particle system 400 etc.

In a second step S2 the particles 410 in the particle system 400 is generated. It is preferred that the generated particles 410 are rendered and displayed on the exterior display 22. However, the particles may not be rendered and displayed on the display 22 until a third step S3.

In a third step S3 the particles 410 in the particle system 400 are moved so that the exterior display 22 is substantially uniformly utilized. As mentioned above it is preferred that a rendering is performed periodically so as to produce a series of images being presented on the exterior display 22, in which series the position and possibly other properties of the particles in the particle system are different for each presented image. This will create an impression of motion with respect to the particles, at least if the images are created and presented at sufficiently short intervals. A substantially uniform utilization of the display 22 may e.g. be accomplished by more or less randomly *generating* and *emitting* particles 410 with different attributes in substantially any direction. In addition or as an alternative this may be accomplished by *varying the attributes* of the already generated particles, e.g. by varying the velocity (speed and direction) of the individual particles in a substantially random manner.

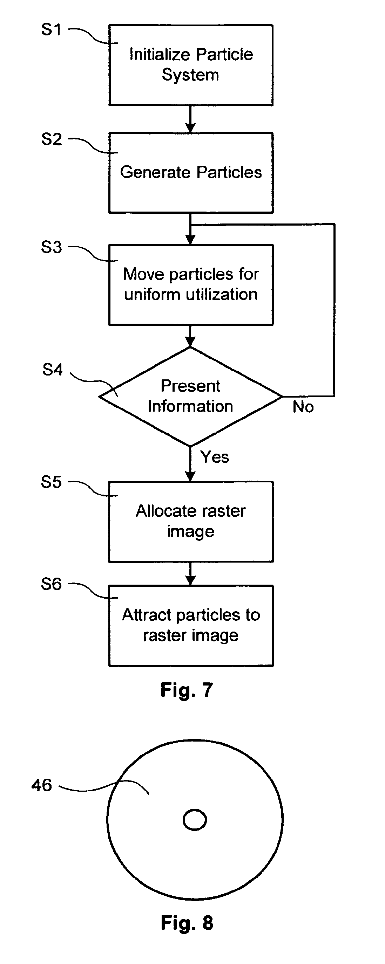

In a fourth step S4 it is investigated whether the display 22 is supposed to present information such as e.g. status information to a user of the cell phone 10. The display 22 may be supposed to present information when old information is changing and/or when the user provides a command, e.g. pushes a button on the key pad 12. If no information is to be presented on the display 22 the display-control 40 will continue to move the particles 410 in the particle system 400 so that the display 22 is substantially uniformly utilized. This is indicated in Fig. 7 by an arrow from the present step S4 to the previous step S3. However, if information is to be presented on the display the display-control 40 continues the execution in the next step S5.

In a fifth step S5 a bitmap 500 or a similar raster image is allocated on the display 22. It is preferred that the bitmap 500 or similar represents an object 600 or similar designed so that a user of the cell phone 10 can interpret and understand the status information in question. The object 600 may e.g. be an icon or similar. A more straight forward embodiment may utilize the plain status information as an object 600, e.g. a letter or a digit that is a substantially direct representation of the status information. An example may be a presentation of status information in the form of a temperature, where the object may have the form of "+/-NN°C", e.g. "+10°C".

In a sixth step S6 the particles 410 of the particle system 400 are attracted to the bitmap 500 that was allocated on the display 22 in the previous step S5. The particles 410 are preferably attracted to the bitmap 500 so as to form an object 600 that represents the status information to be presented. In other words, it is preferred that the particles 410 are attracted to the bitmap 500 and positioned therein so that they create a object 600 being a representation of the bitmap 500, as previously described above with reference to Fig. 5 and 6.

In view of the above description of preferred embodiments it should be clear that the present invention provides an improvement for extending the lifetime of a display arrangement in portable devices. In particular, it should be clear that possible degradation effects are reduced or eliminated in a manner that supports the user in detecting a change in the information presented on the display.

In general, as previously explained, it is preferred that the display-control 40, arranged to perform the exemplifying method described above, is provided in the form of one or more processors with corresponding memory containing the appropriate software in the form of a program code. However, the program code can also be provided on a data carrier such as a CD ROM disc 46 as depicted in Fig. 8 or an insertable memory stick, which will perform the invention when loaded into a computer or into a phone having suitable processing capabilities. The program code can also be downloaded remotely from a server either outside or inside the cellular network or be downloaded via a computer like a PC to which the phone is temporarily connected.

The present invention has now been described with reference to exemplifying embodiments. However, the invention is not limited to the embodiments described herein. On the contrary, the full extent of the invention is only determined by the scope of the appended claims.

## Claims

1. A method for reducing or eliminating degradation effects in a display (22, 22') of a portable device (10), which method is **characterised by** the steps of:
- presenting particles (410) of a particle system (400) on the display (22, 22'), wherein presenting the particles (410) comprises generating the particles (410) by defining particle attributes and emitting them on the display (22,22'),
- moving the particles (410) in the particle system (400) so that the display (22, 22') is substantially uniformly utilized by randomly generating and emitting particles (410) with different attributes in any direction and/or by varying the attributes of the already generated particles (410), and
- altering the movement of the particles (410) by allocating a raster pattern (500) on the display (22, 22') as an attractor to which the particles (410) are attracted so as to form a displayable object (600) when information is to be presented on the display (22, 22'), wherein the displayable object (600) represents the information.

2. The method in claim 1,
***characterized by** the steps of.*
using the particle system (400) comprising at least a subset of particles (410) having a shape that enables the subset of particles (410) to form the displayable object (600).

3. The method in claim 1,
***characterized by** the steps of*
using the particle system (400) comprising at least a subset of particles (410) with a substantially polygonal shape that enables the subset of particles (410) to form the displayable object (600).

4. The method in any one of claim 1-3,
***characterized by** the steps of*
moving the particles (410) in the particle system (400) at a reduced speed when the battery power of the portable device is reduced.

5. A portable device (10) comprising a display (22, 22') and a display control unit (40) being arranged to reduce or eliminate degradation effects in the display (22, 22'), chacterised by operatively:
- presenting particles (410) of a particle system (400) on the display (22, 22'), wherein presenting the particles (410) comprises generating the particles (410) by defining particle attributes and emitting them on the display (22,22'),
- moving the particles (410) in the particle system (400) so that the display (22, 22') is substantially uniformly utilized by randomly generating and emitting particles (410) with different attributes in any direction and/or by varying the attributes of the already generated particles (410), and
- altering the movement of the particles (410) by allocating a raster pattern (500) on the display (22, 22') as an attractor to which the particles (410) are attracted so as to form a displayable object (600) when information is to be presented on the display (22, 22'), wherein the displayable object (600) represents the information.

6. The portable device (10) in claim 5,
***characterized in that***
the particle system (400) comprises at least a subset of particles (410) having a shape that enables the subset of particles (410) to form the displayable object (600).

7. The portable device (10) in claim 5,
***characterized in that***
the particle system (400) comprises at least a subset of particles (410) with a substantially polygonal shape that enables the subset of particles (410) to form the displayable object (600).

8. The portable device (10) in any one of claim 5-7,
***characterized in that***
the display control unit (40) is arranged to operatively move the particles (410) in the particle system (400) at a reduced speed when the battery power of the portable device is reduced.

## Patentansprüche

1. Verfahren zum Reduzieren oder Eliminieren von Abbau-Effekten in einem Display (22, 22'), einer tragbaren Einrichtung (10), wobei das Verfahren die Schritte umfasst:
- Präsentieren von Partikeln (410) eines Partikelsystems (400) auf dem Display (22, 22'), wobei Präsentieren der Partikel (410) umfasst Erzeugen der Partikel (410) durch Definieren von Partikel-Attributen und Abstrahlen dieser auf das Display (22, 22'),
- Bewegen der Partikel (410) in dem Partikelsystem (400), so dass das Display (22, 22') im Wesentlichen gleichmäßig verwendet ist, durch zufälliges Erzeugen und Abstrahlen von Partikeln (410) mit verschiedenen Attributen in jede Richtung und/oder durch Variieren der Attribute der schon erzeugten Partikel (410), und
- Ändern der Bewegung der Partikel (410) durch Zuordnen eines Rastermusters (500) auf dem Display (22, 22') als ein Attraktor, zu welchem die Partikel (410) angezogen werden, um ein anzeigbares Objekt (600) zu bilden, wenn Information auf dem Display (22, 22') anzuzeigen ist, wobei das anzeigbare Objekt (600) die Information darstellt.

2. Verfahren nach Anspruch 1,
**gekennzeichnet durch** die Schritte:
Verwenden des Partikelsystems (400), umfassend mindestens einen Untersatz von Partikeln (410) mit einer Form, welches es dem Untersatz von Partikeln (410) ermöglicht, das anzeigbare Objekt (600) zu bilden.

3. Verfahren nach Anspruch 1,
**gekennzeichnet durch** die Schritte:
Verwenden des Partikelsystems (400), umfassend mindestens einen Untersatz von Partikeln (410) mit einer im Wesentlichen polygonalen Form, welches es dem Untersatz von Partikeln (410) ermöglicht, das anzeigbare Objekt (600) zu bilden.

4. Verfahren nach einem der Ansprüche 1 bis 3,
**gekennzeichnet durch** die Schritte:
Bewegen der Partikel (410) in dem Partikelsystem (400) bei einer reduzierten Geschwindigkeit, wenn die Batterieleistung der tragbaren Einrichtung reduziert ist.

5. Tragbare Einrichtung (10) mit einem Display (22, 22'), und einer Display-Steuereinheit (40), welche eingerichtet sind, um Abbau-Effekte in dem Display (22, 22') zu reduzieren oder zu eliminieren, **gekennzeichnet durch** den Betrieb:
- Präsentieren von Partikeln (410) eines Partikelsystems (400) auf dem Display (22, 22'), wobei Präsentieren der Partikel (410) umfasst Erzeugen der Partikel (410) **durch** Definieren von Partikel-Attributen und Abstrahlen dieser auf das Display (22, 22'),
- Bewegen der Partikel (410) in dem Partikelsystem (400), so dass das Display (22, 22') im Wesentlichen gleichmäßig verwendet ist, **durch** zufälliges Erzeugen und Abstrahlen von Partikeln (410) mit verschiedenen Attributen in jede Richtung und/oder **durch** Variieren der Attribute der schon erzeugten Partikel (410), und
- Ändern der Bewegung der Partikel (410) **durch** Zuordnen eines Rastermusters (500) auf dem Display (22, 22') als ein Attraktor, zu welchem die Partikel (410) angezogen werden, um ein anzeigbares Objekt (600) zu bilden, wenn Information auf dem Display (22, 22') anzuzeigen ist, wobei das anzeigbare Objekt (600) die Information darstellt.

6. Tragbare Einrichtung (10) nach Anspruch 5,
**dadurch gekennzeichnet, dass**:
das Partikelsystem (400) mindestens einen Untersatz von Partikeln (410) mit einer Form umfasst, welches es dem Untersatz von Partikeln (410) ermöglicht, das anzeigbare Objekt (600) zu bilden.

7. Tragbare Einrichtung (10) nach Anspruch 5,
**dadurch gekennzeichnet, dass**:
das Partikelsystem (400) mindestens einen Untersatz von Partikeln (410) mit einer im Wesentlichen polygonalen Form umfasst, welches es dem Untersatz von Partikeln (410) ermöglicht, das anzeigbare Objekt (600) zu bilden.

8. Tragbare Einrichtung (10) nach einem der Ansprüche 5 bis 7,
**dadurch gekennzeichnet, dass**:
die Display-Steuereinheit (40) eingerichtet ist, um die Partikel (410) in dem Partikelsystem (400) wirkend bei einer reduzierten Geschwindigkeit zu bewegen, wenn die Batterieleistung der tragbaren Einrichtung reduziert ist.

## Revendications

1. Procédé de réduction ou d'élimination d'effets de dégradation sur un écran (22, 22') d'un dispositif portatif (10), ledit procédé étant **caractérisé en ce qu'**il comprend les étapes :
- de présentation de particules (410) d'un système de particules (400) sur l'écran (22, 22'), la présentation des particules (410) comprenant la génération des particules (410) en définissant des attributs de particule et en les émettant sur l'écran (22, 22') ;
- de déplacement des particules (410) dans le système de particules (400) de façon que l'écran (22, 22') soit substantiellement utilisé uniformément en engendrant et émettant de façon aléatoire des particules (410) avec des attributs différents dans n'importe quelle direction et/ou en faisant varier les attributs des particules (410) déjà engendrées ; et
- d'altération du déplacement des particules (410) en attribuant un motif tramé (500) sur l'écran (22, 22') en tant qu'attracteur vers lequel les particules (410) sont attirées de façon à former un objet affichable (600) lorsque de l'information est à présenter sur l'écran (22, 22'), l'objet affichable (600) représentant l'information.

2. Procédé selon la revendication 1, **caractérisé par** l'étape consistant à :
utiliser un système de particules (400) comprenant au moins un sous-ensemble de particules (410) ayant une forme qui permet au sous-ensemble de particules (410) de former l'objet affichable (600).

3. Procédé selon la revendication 1, **caractérisé par** l'étape consistant à :
utiliser un système de particules (400) comprenant au moins un sous-ensemble de particules (410) avec une forme substantiellement polygonale qui permet au sous-ensemble de particules (410) de former l'objet affichable (600).

4. Procédé selon l'une quelconque des revendications 1 à 3, **caractérisé par** l'étape consistant à :
déplacer les particules (410) dans le système de particules (400) à une vitesse réduite lorsque l'énergie de batterie du dispositif portatif est réduite.

5. Dispositif portatif (10) comprenant un écran (22, 22') et une unité (40) de commande d'affichage qui est agencée pour réduire ou éliminer des effets de dégradation de l'écran (22, 22'), caractérisé fonctionnellement par :
- la présentation de particules (410) d'un système de particules (400) sur l'écran (22, 22'), la présentation des particules (410) comprenant la génération des particules (410) en définissant des attributs de particule et en les émettant sur l'écran (22, 22') ;
- le déplacement des particules (410) dans le système de particules (400) de façon que l'écran (22, 22') soit substantiellement utilisé uniformément en engendrant et émettant de façon aléatoire des particules (410) avec des attributs différents dans n'importe quelle direction et/ou en faisant varier les attributs des particules (410) déjà engendrées ; et
- l'altération du déplacement des particules (410) en attribuant un motif tramé (500) sur l'écran (22, 22') en tant qu'attracteur vers lequel les particules (410) sont attirées de façon à former un objet affichable (600) lorsque de l'information est à présenter sur l'écran (22, 22'), l'objet affichable (600) représentant l'information.

6. Dispositif portatif (10) selon la revendication 5, **caractérisé en ce que** :
le système de particules (400) comprend au moins un sous-ensemble de particules (410) ayant une forme qui permet au sous-ensemble de particules (410) de former l'objet affichable (600).

7. Dispositif portatif (10) selon la revendication 5, **caractérisé en ce que** :
le système de particules (400) comprend au moins un sous-ensemble de particules (410) avec une forme substantiellement polygonale qui permet au sous-ensemble de particules (410) de former l'objet affichable (600).

8. Dispositif portatif (10) selon l'une quelconque des revendications 5 à 7, **caractérisé en ce que** :
l'unité (40) de commande d'affichage est conçue pour déplacer fonctionnellement les particules (410) dans le système de particules (400) à une vitesse réduite lorsque l'énergie de batterie du dispositif portatif est réduite.
